# EUROPÄISCHE PATENTSCHRIFT

(11) **EP 0 404 787 B1**
(45) Veröffentlichungstag und Bekanntmachung des Hinweises auf die Patenterteilung: **30.11.1994**
(21) Anmeldenummer: 89903025.8
(22) Anmeldetag: 03.03.1989
(51) Int. Cl.: B23Q 1/26, B23Q 7/14, B23Q 5/38

(54) **ANLAGE ZUR BEARBEITUNG UND BZW. ODER MONTAGE VON BAUTEILEN**
INSTALLATION FOR MANUFACTURING AND/OR ASSEMBLING COMPONENTS
INSTALLATION DE FABRICATION ET/OU DE MONTAGE DE COMPOSANTS

(30) Priorität: 03.03.1988 AT 548/88
(43) Veröffentlichungstag der Anmeldung: 02.01.1991
(73) Patentinhaber: Sticht, Walter, A-4800 Attnang-Puchheim (AT)
(72) Erfinder: Sticht, Walter, A-4800 Attnang-Puchheim (AT)
(74) Vertreter: Secklehner, Günter, Dr.
(86) Internationale Anmeldenummer: AT8900022
(87) Internationale Veröffentlichungsnummer: WO8908002

(56) Entgegenhaltungen:
- CH-A- 0 406 977
- DE-A- 2 838 686
- DE-A- 3 211 444
- DE-A- 3 423 390
- DE-C- 0 818 295
- FR-A- 2 522 565
- FR-A- 2 527 965
- FR-A- 2 544 647
- GB-A- 2 153 767
- US-A- 3 998 316
- US-A- 4 158 315

## Beschreibung

Die Erfindung betrifft eine Anlage zur Bearbeitung und bzw. oder Montage von Bauteilen, wie sie im Oberbegriff des Patentanspruchs 1 beschrieben ist (DE-A-33 04 091).

Nach einem älteren nicht vorveröffentlichten Vorschlag des Anmelders gemäß WO-A1-89/06177 (Stand der Technik nach Art. 54(3) EPÜ) ist eine Anlage zur Bearbeitung und bzw. oder Montage von Bauteilen mit Werkstückträgern bekannt, bei der jeder Werkstückträger mit Führungsorganen, insbesondere Stützrollen, auf einer Höhen- und zwischen zwei Seitenführungsbahnen spielfrei geführt ist. Zur spielfreien Seitenführung der Werkstückträger ist eine der beiden Seitenführungsbahnen durch radial elastisch verformbare Druckrollen gebildet, die den Werkstückträger spielfrei gegen die gegenüberliegende andere Seitenführungsbahn drücken und somit als Anpreßvorrichtung wirken. Die Werkstückträger sind untereinander verbunden und mittels einer zentralen Vorschubvorrichtung, nämlich einem Kettenantrieb auf Gehäuseteilen der Anlage verfahrbar.

Desweiteren ist es aus der DE-A1-34 23 319 bekannt, Werkstückträger spielfrei auf einer Höhen- und zwischen zwei Seitenführungsbahnen zu führen. Zum Antrieb dieser Werkstückträger entlang dieser Höhen- und Seitenführungsbahnen dient ein auf jedem Werkstückträger angeordneter Antriebsmotor, der zur Fortbewegung der Werkstückträger mit einem Antriebsritzel in Eingriff steht, welches seinerseits in entlang der Höhen- bzw. Seitenführungsbahnen angeordnete Zahnstangen eingreift. Die Zufuhr der Antriebsenergie zu dem Antriebsmotor bzw. dessen Steuerung ist in diesen Druckschriften nicht beschrieben und ist vor allem auch keine dauernde spielfreie Führung der Werkstückträger, vor allem bei Verzweigungen der Höhen- und Seitenführungsbahnen gegeben.

Grundsätzlich wird bei derartigen Anlagen zwischen sogenannten lose verketteten und starr verketteten Anlagen unterschieden. Bei den lose verketteten Anlagen werden die Werkstückträger völlig unabhängig voneinander entlang der Anlage bewegt und es ist bei Ausfall einer Vorrichtung in einer einzigen Arbeitsstation die Tätigkeit in den anderen Arbeitsstationen über einen gewissen Zeitraum nahezu nicht beeinflußt. Bei den starr verketteten Anlagen sind die Werkstückträger miteinander bewegungsverbunden, sodaß bei Störungen im Bereich einer Arbeitsstation alle Werkstückträger und alle Arbeitsstationen blockiert sind. Jede der beiden Anlagetypen hat ihr spezielles Einsatzspektrum, wobei die starr verketteten Anlagen dort eingesetzt werden, wo nur wenige Arbeitsstationen miteinander verkettet sind, da sich der Gesamtnutzungsgrad aus einer Multiplikation der Nutzungsgrade der einzelnen Arbeitsstationen ergibt. Die lose verketteten Anlagen werden meistens für die Verkettung einer Vielzahl von Arbeitsstationen, beispielsweise bis zu 40 Arbeitsstationen und mehr eingesetzt, da dort der Nutzunggrad ein Mischwert aus den einzelnen Störfällen ist und sich nicht aus einer Multiplikation der Nutzungsgrade in den Einzelstationen zusammensetzt.

Es sind bereits viele verschiedene Anlagen mit loser Verkettung - beispielsweise gemäß DE-A-33 04 091 des gleichen Anmelders - bekannt geworden, die sich für die Verkettung einer Vielzahl von Arbeitsstationen in der Praxis bewährt haben. Die Werkstückträger sind dabei jeweils unabhängig voneinander auf Höhen- und Seitenführungsbahnen geführt, wobei durch eine entsprechende Verwendung von an den Seitenflächen der Werkstückträger angepreßten Förderrollen eine kombinierte Seiten- und Höhenführung mit einer Vorschubvorrichtung sichergestellt wird. Dadurch wird über den gesamten Verlauf einer derartigen Anlage eine exakte Positionierung der Werkstückträger im Zusammenwirken mit der Antriebsvorrichtung erreicht.

Der vorliegenden Erfindung liegt die Aufgabe zugrunde, eine Anlage zur Bearbeitung und bzw. oder zur Montage von Bauteilen zu schaffen, die in technisch einfacher Weise Werkstückträger und Führungseinrichtungen für Werkstückträger vorsieht, die das System an unterschiedliche Einsatzbedingungen anpassungsfähig macht. Darüber hinaus soll es mit derartigen Anlagen auch möglich sein, übliche starre Bearbeitungs- und bzw. oder Montagesysteme, die angepaßt an einen einzigen Anwendungsfall konzipiert werden, zu ersetzen.

Diese Aufgabe der Erfindung wird durch die Merkmale des Patentanspruches 1 gelöst. Vorteilhaft ist bei dieser Ausführungsvariante, daß bei Beibehaltung der spielfreien Führung längs einer Seitenführungsbahn eine individuelle Fortbewegung jedes Werkstückträgers, gegebenenfalls auch unter einfacher Anpassung an unterschiedliche Beladungsverhältnisse, dadurch möglich ist, daß am Werkstückträger ein Energiespeicher und auch eine Steuervorrichtung für die Steuerung, zumindest des Vorschubantriebes, gegeben ist. Dazu kommt, daß der Aufbau einer derartigen Anlage sehr einfach ist, da für die Energieübertragung auf die Werkstückträger keine durchgehende Kontaktverbindung über die gesamte Anlage einerseits oder nur eine punktuelle kontaktweise Anbindung andererseits vorzusehen ist.

Weiters kann die Anlage in der Gestaltung der Taktzeiten der einzelnen Arbeitsstationen variabel ausgelegt werden. Es ist weiters auch möglich, unabhängig von einer einheitlichen Geschwindigkeit einer Transportkette durch Anwahl verschiedener Geschwindigkeitsstufen der am Werkstückträger angeordneten Antriebseinrichtungen die Geschwindigkeit dem zwischen den einzelnen Stationen zurückzulegenden Transportweg anzupassen. Solche Anlagen eignen sich insbesondere dort, wo aus unterschiedlichen Gründen Arbeitsbereiche getrennt werden müssen und dazwischen längere Transportwege zurückzulegen sind. Durch die Wahl einer hohen Vorschubgeschwindigkeit für diese Transportwege kann bei solchen Anlagen die Taktzeit gering gehalten werden bzw. auch die Anzahl der für einen Umlaufprozeß erforderlichen Werkstückträger minimiert werden.

Möglich ist aber auch eine Ausbildung nach Patentanspruch 2, wodurch die Werkstückträger einfach für unterschiedliche Bauteile - durch Verwendung der mit den entsprechenden Aufnahmevorrichtungen versehenen Oberteile - verwendet werden können.

Weitere Vorteile werden durch die Ausbildungen in den Patentansprüchen 3 bis 7 erreicht.

Zum besseren Verständnis der Erfindung wird diese im nachfolgenden anhand der in den Zeichnungen dargestellten Ausführungsbeispiele näher erläutert.

Es zeigen:
- Fig. 1: eine aus WO-A-89/06177 bekannte Anlage in Seitenansicht in einfacher schematischer Darstellung;
- Fig. 2: einen Gehäuseteil der bekannten Anlage mit verketteten Werkstückträgern und den Einrichtungen zur Seiten- und Höhenführung in schaubildlicher und stark vereinfachter schematischer Darstellung;
- Fig. 3: eine erfindungsgemäße Ausbildung eines Werkstückträgers in Stirnansicht mit Einrichtungen zur Seiten- und Höhenführung und einer Vorschubanordnung;
- Fig. 4: einen erfindungsgemäßen Werkstückträger in Stirnansicht mit einer Vorschubanordnung mit einer Variante der Einrichtung zur Seiten- und Höhenführung;
- Fig. 5: eine Variante eines Teiles einer erfindungsgemäß ausgebildeten Anlage mit einem Werkstückträger in Draufsicht und mit der Einrichtung zur Seiten- und Höhenführung;
- Fig. 6: ein Teil einer erfindungsgemäß ausgebildeten Anlage mit einem Werkstückträger und der Einrichtung zur Seiten- und Höhenführung in Stirnansicht, teilweise geschnitten gemäß Linien XX-XX in Fig 5;
- Fig. 7: einen Teil einer erfindungsgemäß ausgebildeten Anlage in Draufsicht und mit schematischer Darstellung der Versorgungs- und Steuereinrichtung.

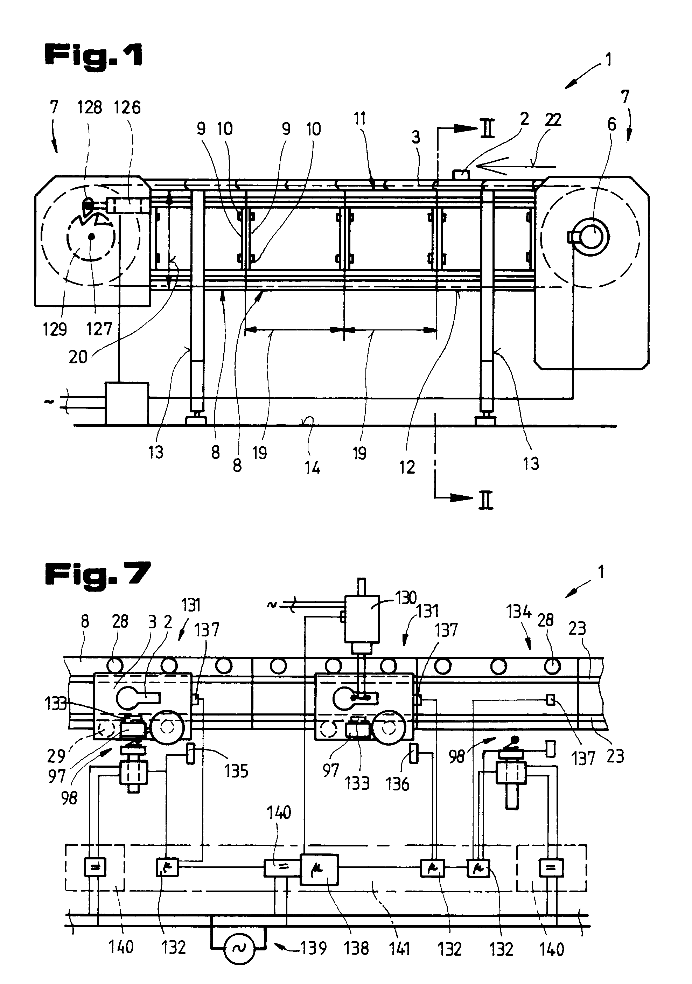

In Fig. 1 ist eine Anlage 1 zum Bearbeiten und bzw. oder zur Montage von Bauteilen 2 gezeigt. Diese Bauteile 2 sind auf Werkstückträgern 3 angeordnet. Zur Halterung der Bauteile 2 auf den Werkstückträgern 3 sind Aufnahmen 4 mit dem Werkstückträger 3 verbunden bzw. an diesem einstückig angeformt. Die Werkstückträger 3 bilden im vorliegenden Ausführungsbeispiel eine Transportkette 5. Zum Vorschub der Transportkette 5 dient eine Vorschubvorrichtung 6 der im Bereich einer Umlenkstation 7 für die Transportkette 5 angeordnet ist. Zwischen den beiden Umlenkstationen 7 befinden sich mehrere Gehäuseteile 8, die im dargestellten Ausführungsbeispiel selbsttragend ausgebildet sind. Diese Gehäuseteile 8 weisen einander zugewandte Stirnplatten 9 auf, die untereinander über Führungs- und bzw. oder über Kupplungsvorrichtungen 10 zu einer selbsttragenden Gehäuseeinheit verbunden werden können. Senkrecht zu den Stirnplatten 9 verlaufen Führungsbahnen 11, 12, wobei in der Führungsbahn 11 der gezogene Strang und in der Führungsbahn 12 der rücklaufende Strang der Transportkette 5 geführt ist. Über die Führungs- und bzw. oder Kupplungsvorrichtungen 10 zwischen den einzelnen Gehäuseteilen 8 bilden die einander gereihten Führungsbahnen 11 bzw. 12 der Gehäuseteile 8 eine durchgehende plane Führungseinrichtung für die Transportkette 5. Die aus den Gehäuseteilen 8 und den Umlenkstationen 7 gebildete Anlage 1 ist über Stützvorrichtungen 13 auf einer Aufstandsfläche 14 abgestützt.

Die Stützvorrichtungen 13 werden durch spiegelbildlich zu einer vertikalen Symmetrieebene 15 angeordnete L-förmige Stützen gebildet, die mit den Gehäuseteilen 8 im Bereich von Seitenwänden 16 mit diesen verbunden sind. Zur einfachen Befestigung der L-förmigen Stützen an den Seitenwänden 16 sind in längsverlaufende eine durchgehende Befestigungsvorrichtung bildende Montageleisten 17 vorgesehen. Diese Montageleisten 17 werden beispielsweise durch T-förmige Nuten gebildet, in die Nutensteine 18 mit einer der Nutenform angepaßten Querschnittsform eingesetzt werden, die an ihren den Stützvorrichtungen 13 zugewandten Enden beispielsweise mit einem Gewinde versehen sind, wobei über Muttern die Stützvorrichtungen 13 gegen die Seitenwände 16 der Gehäuseteile 8 gepreßt und gegenüber diesen fixiert werden. Ein Vorteil der Verwendung einer derartigen durchgehenden Befestigungsvorrichtung liegt darin, daß die Stützvorrichtungen 13 in beliebiger Lage längs der Anlage 1 positioniert werden können, um so die Anordnung von Arbeitsstationen bzw. diesen zugeordneten Handhabungs- oder Zuführgeräten nicht zu behindern. Gleichermaßen können diese durchgehenden Befestigungsvorrichtungen aber auch zum Fixieren der Endpositionen von Zuführgeräten bzw. Handhabungseinrichtungen dienen, wodurch sie in mehrfacher Weise ausnützbar sind.

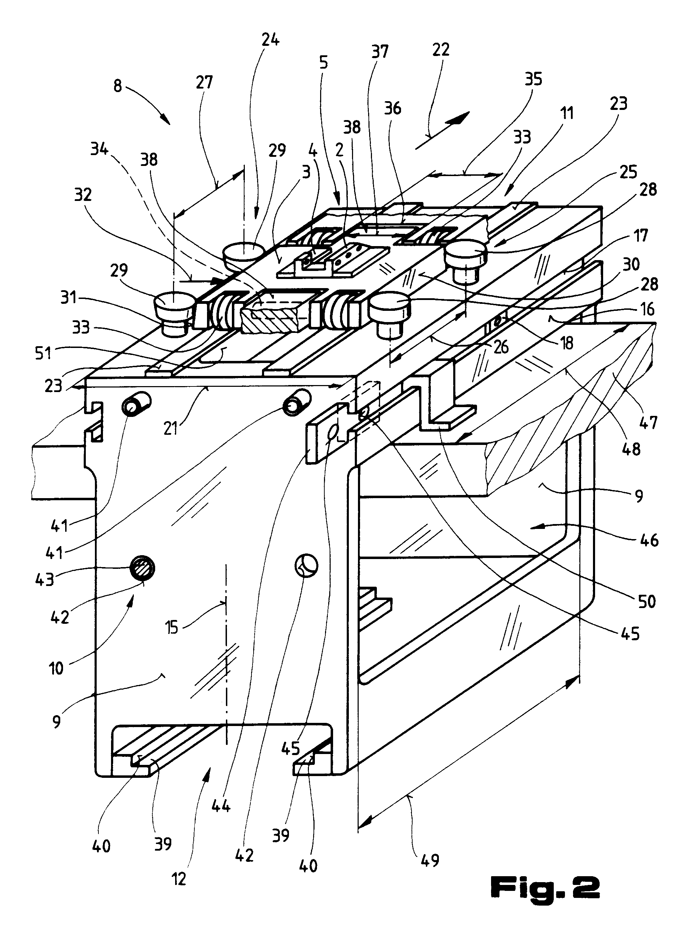

Wie aus der Darstellung in Fig.1 und 2 ersichtlich weisen die Gehäuseteile 8 einheitliche Abmessungen, wie eine Länge 19, eine Höhe 20 und eine Breite 21 auf. Dadurch ist ein nahtloses Aneinanderfügen der Gehäuseteile 8 sowie ein problemloser Austausch einzelner Gehäuseteile 8 ohne weiteres möglich. Durch die durchgehende Befestigungsvorrichtung in Form der Montageleiste 17 wird dabei noch ermöglicht, daß beim Austausch von einzelnen Gehäuseteilen 8 die unmittelbar anschließenden Gehäuseteile 8 provisorisch über Stützvorrichtungen 13 abgestützt werden können, sodaß beispielsweise der schadhafte Gehäuseteil 8 bzw. die im Bereich derselben angeordnete Arbeitsstation durch eine anders gestaltete Arbeitsstation einfach ersetzt werden kann.

Bei entsprechender Gestaltung der Befestigungsvorrichtung, insbesondere bei präziser Ausführung der Längsausrichtung dieser Befestigungsvorrichtung ist es auch möglich durch Einschieben von Gleitsteinen im Übergangsbereich zwischen benachbarten Gehäuseteilen 8 diese beiden Gehäuseteile über diesen Gleitstein sowohl der Höhe als auch der Seite nach zu positionieren und in ihrer Position zu fixieren. Eine derartige Ausbildung der Führungs- und bzw. oder Kupplungsvorrichtung 10 würde ermöglichen, daß die einzelnen Gehäuseteile 8 senkrecht zu einer Vorschubrichtung - Pfeil 22 - aus- bzw. eingebaut werden können.

Wie weiters ersichtlich können die Stützvorrichtungen 13 mit senkrecht zur Aufstandsfläche 14 verstellbaren Fußelementen ausgestattet sein, um eine waagrechte Aufstellung der Anlage unabhängig von Unebenheiten im Bereich der Aufstandsfläche 14 zu ermöglichen.

In Fig.2 ist weiters ein Gehäuseteil 8 gezeigt. Die Führungsbahn 11 lagert den gezogenen Strang der Transportkette 5 und umfaßt zur Höhenführung der die Werkstückträger 3 bildenden Kettenglieder Führungsleisten 23. Zur Seitenführung dienen Höhen- und bzw. oder Seitenführungsbahnen 24,25 die durch in einem Abstand 26 bzw. 27 in Förderrichtung - Pfeil 22 - hintereinander angeordnete Stützrollen 28 und Druckrollen 29 gebildet sind. Die Stützrollen 28 sind dabei einer Seitenfläche 30 des Werkstückträgers 3 und die Druckrollen 29 einer dieser Seitenfläche 30 gegenüberliegenden Seitenfläche 31 zugeordnet. Durch die Druckrollen 29 wird auf die Werkstückträger 3 eine durch einen Pfeil 32 angedeutete Druckkraft in Richtung der Stützrollen 28 ausgeübt. Dadurch wird erreicht, daß die Werkstückträger 3 quer zur Fortbewegungsrichtung gemäß Pfeil 22 eine exakte Position einnehmen, die bis auf einen Bruchteil eines Millimeters genau ist. Die exakte Höhenführung wird dabei durch die Führungsleisten 23 sichergestellt.

Um über einen langen Zeitraum eine exakte Höhen- und Seitenführung der Werkstückträger 3 zu ermöglichen, sind diese auf den Führungsleisten 23 über Laufrollen 33 abgestützt. Diese Laufrollen 33 sind auf einer als Kettenbolzen 34 dienenden Achse gelagert. Der Kettenbolzen 34 verbindet jeweils zwei unmittelbar aufeinanderfolgende Werkstückträger 3, die gleichzeitig die Kettenglieder bilden, zur gemeinsamen Fortbewegung in Richtung senkrecht zu den Führungsleisten 23 also in Höhenrichtung und in Vorschubrichtung - gemäß Pfeil 22 - also in Längsrichtung bzw. Transportrichtung. Die Höhenführung des Werkstückträgers 3 erfolgt dadurch jeweils über die Laufrollen 33 sowie über die dem unmittelbar vorgeordneten Werkstückträger zugeordneten Laufrollen 33, wobei sich der Werkstückträger 3 jeweils über die Kettenbolzen 34 auf diesen Laufrollen 33 abstützt. Um nunmehr für jeden Werkstückträger 3 eine unabhängige Positionierung der Seite nach zu ermöglichen, ist eine Breite 35 einer Ausnehmung 36 im Werkstückträger 3 größer als eine Breite 37 eines auf dem Kettenbolzen 34 gelagerten Kupplungsfortsatzes 38. Dadurch ist es möglich, daß die einander unmittelbar aufeinanderfolgenden Kettenglieder bzw. Werkstückträger 3 seitlich relativ zueinander verstellt werden können und die Seitenjustierung der Werkstückträger 3 daher nur von der Lage der Seitenführungsbahn 25 und nicht von der Lage der Transportkette 5 als solches beeinflußt ist.

Wie weiters aus dieser Darstellung ersichtlich, ist der Gehäuseteil 8 einstückig ausgebildet und weist neben der Führungsbahn 11 auf seiner Unterseite auch eine durch Führungsleisten 39 gebildete Führungsbahn 12 auf, in der der rücklaufende Strang der Transportkette 5 über die Laufrollen 33 geführt ist. Zur Seitenführung der Werkstückträger 3 dienen im Bereich dieser Führungsleisten 39 senkrechte Führungsflächen 40. Durch diese soll ein Schleudern der Werkstückträger verhindert werden. Die beiden die Führungsbahnen 11 und 12 aufnehmenden Teile sind über die Stirnplatten 9 miteinander verbunden. In dieser Stirnplatte 9 sind Paßstifte 41 und Bohrungen 42 für Paßschrauben oder Schrauben 43 angeordnet, die gemeinsam die Führungs- und bzw. oder Kupplungsvorrichtung 10 bilden. Weiters ist die durchgehende Befestigungsvorrichtung die als Montageleiste 17 mit einem T-förmigen Querschnitt gebildet ist, gezeigt. Anstelle der Paßstifte 41 kann eine in der Montageleiste 17 spiegelfrei geführte Kupplungsleiste 44 zum niveaugleichen Verbinden der Gehäuseteile 8 verwendet werden. Ist diese Kupplungsleiste 44 mit Bohrungen 45 versehen, so kann über die Bohrungen 45 und darin eingesetzte Schrauben auch die Kupplung der einander benachbarten Gehäuseteile 8 erfolgen.

Von den Führungsbahnen 11,12 und den Stirnplatten 9 wird ein Freiraum 46 begrenzt, in welchem eine Tischplatte 47 angeordnet ist.

Eine Länge 48 der Tischplatte 47 ist dabei geringer als eine Länge 49 des Freiraumes 46. Dadurch ist es im begrenzten Ausmaß möglich, die Tischplatte 47 in Vorschubrichtung - Pfeil 22 - gegenüber dem Gehäuseteil 8 zu verschieben und zu positionieren. Die Führung und Befestigung der Tischplatte 47 kann dabei wie schematisch angedeutet, über Haltebügel 50 erfolgen, die in der Montageleiste 17 eingehängt sind.

Aus der Zeichnung ist weiters ersichtlich, daß zwischen den Führungsleisten 23 eine Öffnung 51 angeordnet ist, innerhalb welcher ein Zugang zu den Werkstückträgern 3 von unten her möglich ist. Dadurch können zusätzliche Abstützungen des Werkstückträgers 3 vor allem in jenen Stationen in welchen beim Montieren bzw. beim Nieten oder Einpreßen von Teilen eine Entlastung der Laufrollen 33 des Werkstückträgers 3 notwendig ist, vorgesehen werden, bzw. ist es auch möglich, im Werkstückträger 3 drehbare Teile vorzusehen, die in einzelnen Stationen durch von unten her auf den Werkstückträger 3 einwirkende Antriebe in unterschiedliche Drehstellungen verstellt werden können.

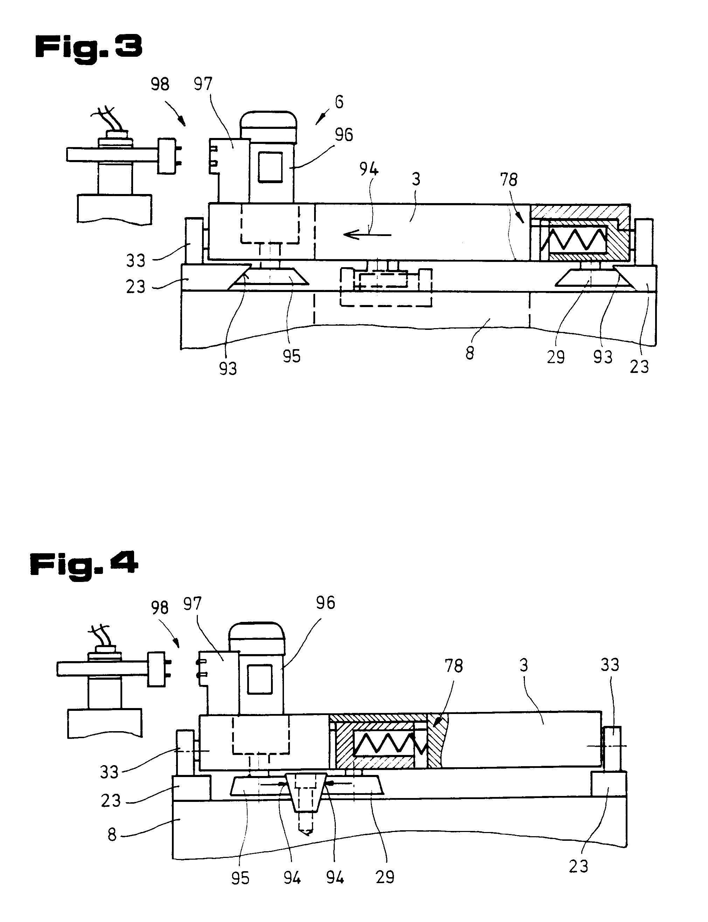

Die Fig.3 und 4 zeigen weitere Anordnungsvarianten von Höhen- und bzw. oder Seitenführungsbahnen 24,25 für die spielfreie Führung von Werkstückträgern 3 und von Vorschubvorrichtung 6. An den Werkstückträgern 3 sind an den Seitenkanten um horizontale Achsen drehbar gelagerte Laufrollen 33 angeordnet. Diesen zugeordnet sind Führungsleisten 23, die am Gehäuseteil 8 in Förderrichtung angeordnet sind. Geneigten Anlageflächen 93 der Führungsleisten 23 sind am Werkstückträger 3 sind um vertikale Achsen drehbar gelagerte Druckrollen 29 zugeordnet. Durch die Anpreßvorrichtung 78 der Druckrollen 29 und die der Anpreßkraft entgegenwirkende Reaktionskraft - Pfeil 94 - wird eine spiel freie Führung von Antriebsrollen 95 der Werkstückträger 3 entlang der Führungsleisten 23 erreicht. Den über vertikale Achsen drehbar angeordneten Antriebsrollen 95 ist ein am Werkstückträger 3 angeordneter Vorschubantrieb z.B. ein Motor 96 zugeordnet. Einem Speichereinrichtung 97 ist eine insbesondere kuppelbare Versorgungseinrichtung 98 zugeordnet, die in bestimmbaren Zeitintervallen den Speichereinrichtung 97 mit einem Energiesystem verbunden um diesen mit der für den Betrieb der Vorschubantriebe 96 und gegebenenfalls der Steuerung erforderlichen Energie zu versorgen. Wie weiters in Fig.3 strichliert dargestellt ist es möglich, die Druckrollen 29 und Antriebsrollen 95 in einem Profil wie z.B. einem in Richtung zum Werkstückträger 3 offenen U-Profil anzuordnen. Es ist weiters auch möglich, für den Querschnitt der Führungensleisten, der Stützrollen 28, der Druckrollen 29 und der Antriebsrollen 95 andere Profilquerschnitte für eine spielfreie Seitenführung der Werkstückträger 3 einzusetzen. Der am Werkstückträger 3 angeordnete Energiespeicher kann beispielsweise durch eine Batterie oder einen Speicher für ein Druckmedium beispielsweise Hydrauliköl oder Druckluft gebildet sein. Dadurch ergibt sich die Möglichkeit, neben dem Vorschubvorrichtung 6 der beispielsweise auch durch einen Schrittschaltmotor gebildet sein kann, auch andere Einrichtungen am Werkstückträger 3 unabhängig von der übrigen Maschine zu betreiben. Vor allem ist es dadurch möglich eine am Werkstückträger 3 unabhängig von der übrigen Maschine zu betreiben. Vor allem ist es dadurch möglich eine am Werkstückträger 3 angeordnete Steuervorrichtung zur Beaufschlagung des Vorschubantriebes bzw. zur Meßwertüberwachung des Vorschubweges zu verwenden. Vor allem können damit Meßwertgeber oder Übewachungsorgane mit Energie versorgt werden, die die Position des Werkstückträgers gegenüber einer festen entlang der Seiten- bzw. Höhenführungsbahn angeordneten Maßskala feststellen um den Werkstückträger 3 entlang der Seiten- bzw. Höhenführungsbahn positionieren zu können. Selbstverständlich ist es anstelle der gezeigten mechanischen Übertragungsglieder für die Versorgungseinrichtung 98 beispielsweise Kontaktschleifer oder dgl. auch möglich mit berührungslosen Systemen die Energie zu übertragen, wie beispielsweise durch Wirbelfelder oder andere sichtbare oder unsichtbare Energiequellen wie beispielsweise Licht, Magnetfelder oder dgl.

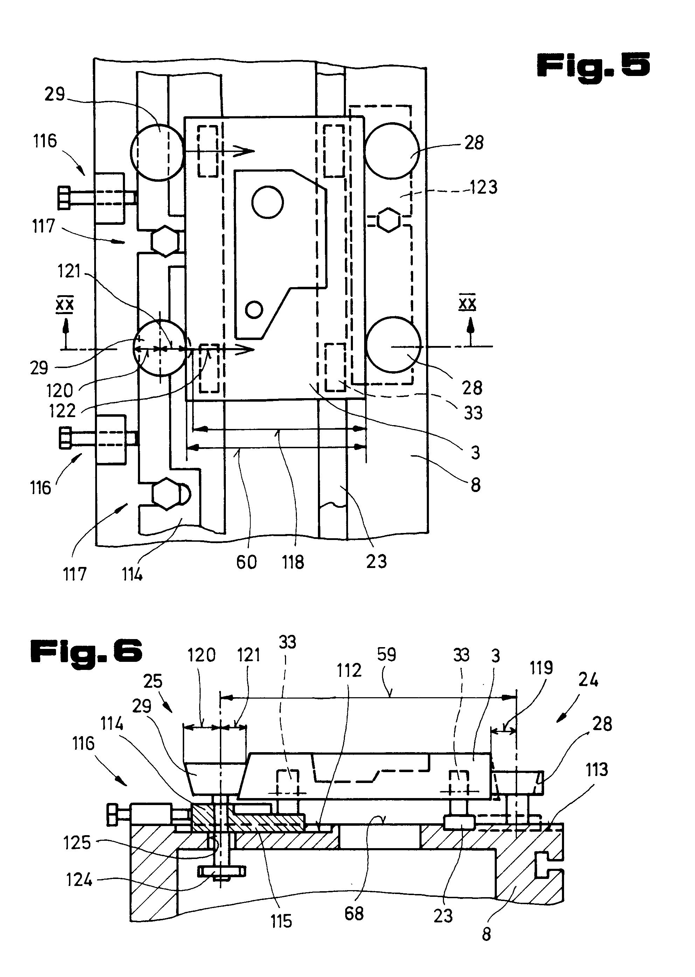

In den Fig.5 und 6 sind die Seiten- und bzw. oder Höhenführungsbahnen 24,25 durch auf der Fläche 68 des Gehäuseteiles 8 angeordnete Planflächen 112,113 und Führungsleisten 23 gebildet. In Förderrichtung der Werkstückträger 3 sind Montageschienen 114 angeordnet. Den Führungsleisten 23 sind im Werkstückträger 3 angeordnete Laufrollen 33 zugeordnet. Über vertikale Achsen drehbar sind im Gehäuseteil 8 Stützrollen 28 der Höhen- und bzw. oder Seitenführungsbahn 24 gelagert. Den Stützrollen 28 senkrecht zur Föderrichtung gegenüberliegend sind die Druckrollen 29 über vertikale Achsen drehbar gelagert auf der Montageschiene 114 angeordnet. Ein Fortsatz 115 der Montageschiene 114 bildet eine Lauffläche bzw. Führungsleiste für die Laufrollen 33 des Werkstückträgers 3. Der Montageschiene 114 sind Verstellantriebe 116 und Befestigungsvorrichtungen 117 zugeordnet. Dadurch ist es möglich, daß die Breite 60 des Werkstückträgers 3 größer ist als eine Distanz 59 der vermindert um die Radien 119,120 der Führungsrolle 28 und der in radialer Richtung erlastische Druckrolle 29. Der Radius 120 wird daher durch eine Verformung der Druckrolle 29 auf eine Distanz 121 verringert. Dadurch wird eine Anpreßkraft in Richtung eines Pfeiles 122 und eine spiel freien Führung des Werkstückträgers 3 längs der Höhen- und bzw. oder Seitenführungsbahnen 24 bzw. der Stützrollen 28 bewirkt. Der Verstellantrieb 116 kann zum Beispiel, wie dargestellt, durch Schrauben aber auch durch Schrittschaltmotorantriebe, Exzenterantriebe oder Zylinderantriebe gebildet sein, wodurch eine automatische Steuerung der Distanz 59 für veränderliche Breiten 60 der Werkstückträger 3 erreicht wird. Dadurch können so ausgestattete Anlagen durch die Justier- und Umrüstungsmöglichkeiten sehr schnell auf geänderte Anforderungen abgestimmt werden und sind daher universell verwendbar. Wie weiters durch strichlierte Linien dargestellt, können auch die Stützrollen 28 eine konische und in Richtung der Fläche 68 sich verjüngende Lauffläche aufweisen, wodurch ein Abheben des Werkstückträgers 3 auf an dieser Längsseite zusätzlich verhindert werden kann. Auch ist es weiters möglich, mehrere Stützrollen 28 auf einer gemeinsamen Montageleiste 123 anzuordnen und der Montageleiste 123 ebenfalls einen Verstellantrieb und eine Befestigungsvorrichtung zuzuordnen. Durch die Anordnung der Stützrollen 28 und Druckrollen 29 auf quer zur Förderrichtung verstellbaren Montageleisten 123 und Montageschienen 114, sind die den Achsen 124 im Gehäuseteil 8 zugeordneten Bohrungen 125 mit einem, dem Verstellweg Rechnung tragenden Übermaß und ohne Forderung an Präzision ausführbar.

In Fig.7 ist ein Teil einer erfindungsgemäßen Anlage 1 mit einer Möglichkeit zur Versorgung der mit Vorschubvorrichtung 96 ausgestatteten Werkstückträger 3 mit Antriebsenergie und gegebenenfalls zur Steuerung der Werkstückträger 3 dargestellt. Der Vorschubantrieb kann hierbei durch verschiedenartige Motore beispielsweise durch elektrische Schrittschaltmotore oder Pneumatikmotore gebildet sein. Eine derartige Anlage ist aus einer Anzahl von Gehäuseteilen 8 mit den darauf angeordneten Führungsleisten 23 und Stützrollen 28 für die Führung der die Bauteile 2 aufnehmenden Werkstückträger 3 zusammengesetzt. Zur Versorgung der Vorschubvorrichtung 96 auf den Werkstückträgern 3 sind Versorgungseinrichtungen 98 vorgesehen, mit welchen Energie beispielsweise elektrische Energie oder ein Druckmedium beispielsweise Druckluft oder Drucköl von den Gehäuseteilen 8 auf die Werkstückträger 3 übertragen werden kann. Die Versorgungseinrichtung 98 kann dabei wie in Fig.3 und 4 dargestellt durch Schleifkontakte oder Steckkontakte gebildet sein, die selbsttätig oder durch Federwirkung oder über eigene Antriebe mit den Kupplungsteilen der Versorgungseinrichtung 98 am Werkstückträger 3 in Verbindung gebracht werden. So sind in den vorliegenden Ausführungbeispiele federbelastete Kontakte mit Kontaktrollen vorgesehen, die sich beim Einlaufen des Werkstückträgers 3 in den Bereich der Versorgungseinrichtung 98 automatisch an die entsprechenden Kupplungsglieder des Werkstückträgers 3 anlegen. Somit kann elektrische Energie übertragen und z.B. in dem durch eine Batterie gebildeten Speichereinrichtung 97 gespeichert werden. Diese Speichereinrichtung 97 kann aber beispielsweise bei einem Druckmedium durch einen Hydraulikölspeicher oder einen Druckluftspeicherbehälter gebildet sein.

Desweiteren sind an den Gehäuseteilen 8 Handlinggeräte 130 oder andere Bearbeitungs- bzw. Manipulationsvorrichtungen oder Zuführgeräte befestigt. Die Speichereinrichtungen 97 werden wie in Position 131 gezeigt bedarfsweise oder intervallweise insbesondere jedoch im Bereich der Bearbeitungsstellen, also während des Stillstandes der Werkstückträger 3 über die Versorgungseinrichtung 98 mit Energie versorgt. Gleichzeitig können mit der Übertragung der Energie auch Steuersignale, Meßdaten oder verschieden Positionen von einem externen Prozessor 132 dem Werkstückträger bzw. den der am Werkstückträger angeordneten Steuereinrichtung 133 übermittelt werden. Diese Steuerbefehle können die nächste Position des Werkstückträgers 3 festlegen oder auch die Geschwindigkeit für den folgenden Transportabschnitt. Die Positionen 131 und 134 werden über mit dem Prozessor 132 in Verbindung stehende Sensoren bzw. Meßwertgeber 135,136 wie z.B. Induktionsmeßwertgeber oder optische und/oder elektronische Leseeinrichtungen erfaßt und mit Positioniereinrichtungen 137 festgelegt. Ein gemeinsamer Rechner 138 koordiniert die externen Prozessoren 132 und führt die übergeordneten Steuer- und Funktionsüberwachung durch. Diese kann weiters dem Betriebszustand der gesamten Anlage 1 signalisieren und dokumentieren und bei Bedarf Alarmmeldungen abgeben. Desweiteren ist eine Energiequelle 139 vorgesehen, die über einen Umformer 140 den Rechnerverbund 141 versorgt die mit dem auf den Gehäuseteilen 8 angeordneten Übertragungsvorrichtung 98 verbunden ist.

Zur Übertragung der Energie können selbstverständlich auch photoelektrische Elemente verwendet werden, die durch entsprechend gestaltete Lichtquellen über den Verlauf der Seiten- und Höhenführungsbahnen oder nur im Bereich der einzelnen Positionen 131,134 bestrahlt werden.

In Fig.7 ist ein Teil einer erfindungsgemäßen Anlage 1 mit einer Möglichkeit zur Versorgung der mit Motore 96 ausgestatteten Werkstückträger 3 mit elektrischer Energie und zur Steuerung der Werkstückträger 3 dargestellt. Längs einer Transportstrecke aus einer Anzahl von Gehäuseteilen 8 mit den darauf angeordneten Führungsleisten 23 und Stützrollen 28 für die Führung der die Bauteile 2 aufnehmenden Werkstückträger 3 sind Versorgungseinrichtungen 98 und z.B. ein Handlinggerät 130 angeordnet. Am Werkstückträger 3 sind Speichereinrichtungen 97 angeordnet, die wie in Position 131 gezeigt die bedarfsweise oder intervallweise mit der Versorgungseinrichtung 98 verbunden werden, sodaß die Speichereinrichtung 97 für den Betrieb des Motors 96 Energie zugeführt werden kann. Gleichzeitig können von einem externen Prozessor 132 Steuerbefehle wie z.B. Vorgabe der nächsten Position, Wahl der Geschwindigkeit für den folgenden Transportabschnitt etc. übermittelt werden. Die Positionen 131, 133 und 134 werden über mit dem Prozessor 132 in Verbindung stehende Meßwertgeber 135,136 wie z.B. Induktionsfühler, optische und/oder elektronische Leseeinrichtungen erfaßt und mit Positioniereinrichtungen 137 festgelegte Ein gemeinsamer Rechner 138 koordiniert die externen Prozessoren 132 und führt die übergeordnete Steuer- und Funktionsüberwachung durch. Dieser kann weiters den Betriebszustand der gesamten Anlage 1 signalisieren und dokumentieren und bei Bedarf Alarmmeldungen abgeben. Eine Energiequelle 139 versorgt über Umformer 140 den Rechnerverbund 141 und die Versorgungseinrichtungen 98.

## Patentansprüche

1. Anlage zur Bearbeitung und bzw. oder Montage von Bauteilen mit Werkstückträgern (3), die mit Aufnahmen zur Halterung von Bauteilen versehen sind, bei der jeder Werkstückträger (3) mit Führungsorganen, insbesondere Stützrollen (28), auf einer Höhen- und zwischen zwei Seitenführungsbahnen (24,25) spielfrei geführt und mit einer zwischen dem Werkstückträger (3) und einer der beiden Seitenführungsbahnen (25) angeordneten Anpreßvorrichtung (78) versehen ist, die eine in Richtung der gegenüberliegenden Seitenführungsbahn (24) gerichtete Anpreßkraft (94) ausübt und daß der Werkstückträger (3) mittels einer Vorschubvorrichtung auf Gehäuseteilen (8) der Anlage (1) verfahrbar ist, dadurch gekennzeichnet, daß eine oder mehrere von an jedem Werkstückträger (3) angeordneten Druckrollen (29) oder Antriebsrollen (95) mit einem Motor (96) als Vorschubvorrichtung verbunden ist bzw. sind, der mit einer am Werkstückträger (3) angeordneten Speichereinrichtung (97) und Steuereinrichtung (133) verbunden ist, die an einer berührungslosen oder zumindest an einer Arbeitsstation eine mit einer Kupplungsvorrichtung für eine Versorgungseinrichtung (98) verbundene Anschlußvorrichtung von einer ein weiteres Energiesystem aufweisenden Einrichtung zur Übertragung von Energie und Steuersignalen zwischen dem Werkstückträger (3) und dem Gehäuseteil (8) angeschlossen sind.

2. Anlage nach Anspruch 1, dadurch gekennzeichnet, daß der Werkstückträger (3) mehrteilig ausgebildet ist und einem Teil, insbesondere dem Unterteil (104), Laufrollen (33) zugeordnet sind und in einem weiteren Teil, insbesondere dem Oberteil (103), Aufnahmen (4) für den Bauteil (2) angeordnet sind.

3. Anlage nach Anspruch 1 oder 2, dadurch gekennzeichnet, daß der Energiespeicher bzw. die Speichereinrichtung (97) durch eine Batterie oder einen Speicher für ein Druckmedium, beispielsweise einen Hydraulikölspeicher oder einen Druckluftspeicherbehälter, gebildet ist.

4. Anlage nach einem der Ansprüche 1 bis 3, dadurch gekennzeichnet, daß neben der Vorschubvorrichtung auch andere Einrichtungen am Werkstückträger (3) mit der Speichereinrichtung (97) unabhängig von der übrigen Maschine betreibbar sind.

5. Anlage nach einem der Ansprüche 1 bis 4, dadurch gekennzeichnet, daß die Energieübertragungsvorrichtung Wirbelfelder oder andere sichtbare oder unsichtbare Energiequellen, wie beispielsweise Licht-, Magnetfelder oder dgl., aufweist und z.B. fotoelektrische Elemente umfaßt.

6. Anlage nach einem der Ansprüche 1 bis 5, dadurch gekennzeichnet, daß die Steuervorrichtung am Werkstückträger zur Meßwertüberwachung des Vorschubweges ausgebildet ist.

7. Anlage nach einem der Ansprüche 1 bis 6, dadurch gekennzeichnet, daß die Vorschubvorrichtung Schrittschaltmotorantriebe aufweist.

## Claims

1. An installation for machining and/or assembling components with workpiece carriers (3), which are provided with receivers to hold components, in which each workpiece carrier (3) has guiding elements, in particular support rollers (28) ad is guided without play on a vertical and between two lateral guideways (24, 25) ad is provided with a pressing device (78), arranged on one of the two lateral guideways (25), which, in the direction of the opposite lateral guideway (24) exerts a pressure force (94), and in which the workpiece carrier (3) can be moved along on the housing parts (8) of the installation (1) by means of a feed device, characterized in that one or more of the pressure rollers (29) or drive rollers (95) arranged on each workpiece carrier (3) is or are connected to a motor (96) serving as a feed device, which is connected with a storage device (97) and a control device (133) arranged on the workpiece carrier (3), which storage and control device is connected in a contactless manner or is connected in at least one workstation with a coupling device of a connection device for a supply device (98), said connection device being connected with a device from a further energy system for the transfer of energy and control signals between the workpiece carrier (3) and the housing part (8).

2. An installation according to claim 1, characterized in that the workpiece carrier (3) is constructed in several parts and one part, in particular the lower part (104), is associated with track rollers (33) and that in a further part, in particular the upper part (103) receivers (4) are arranged for the component (2).

3. An installation according to claim 1 or 2, characterized in that the energy storage or the storage device (97) consists of a battery or a tank for a pressure fluid, for example a hydraulic oil container or a compressed-air storage tank.

4. An installation according to claims 1 to 3, characterized in that not only the feed device but also other devices on the workpiece carrier (3) can be activated independently of the rest of the machine by the storage device (97).

5. An installation according to claims 1 to 4, characterized in that the energy transfer device comprises rotational fields or other visible or invisible sources of energy, such as light fields, magnetic fields or the like and for example photoelectric elements.

6. An installation according to claims 1 to 5, characterized in that the control device on the workpiece carrier is designed to control the measured values of the feed path.

7. An installation according to claims 1 to 6, characterized in that the feed device comprises stepping motor drives.

## Revendications

1. Installation pour l'usinage et/ou le montage de pièces détachées avec des porte-pièces (3) munis de récipients pour la fixation des pièces détachées, dans laquelle chaque porte-pièces (3) est guidé sans jeu sur une voie de guidage en hauteur et entre deux voies de guidage latérales (24,25) par l'intermédiaire des éléments de guidage, en particulier des rouleaux d'appui (28) et qui comprend un dispositif de pression (78) disposé entre le porte-pièces (3) et une de deux voies de guidage latérales (25) qui exerce une force de pression (94) en direction de la voie de guidage (24) opposée et dans laquelle le porte-pièces (3) peut être déplacé sur les pièces de bâti (8) de l'installation (1) au moyen d'un dispositif d'avance, caractérisée en ce qu'un ou plusieurs galets presseurs (29) ou des rouleaux de commande (95) disposés sur chaque porte-pièces (3) sont reliés à un moteur (96) comme dispositif d'avance, qui est relié à un dispositif de stockage (97) et un dispositif de commande (133) se trouvant sur le porte-pièces (3), et ceux-ci sont reliés d'une manière sans contact ou sont reliés au moins dans un poste de travail à un dispositif d'accouplement d'un dispositif de connexion pour un dispositif d'alimentation (98), ledit dispositif de connexion état pourvu d'un dispositif alimenté par un autre système d'énergie pour le transfert d'énergie et des signaux de commande entre le porte-pièces (3) et la pièce de bâti (8).

2. Installation selon la revendication 1, caractérisée en ce que le porte-pièces (3) est constitué par plusieurs parties et une partie, en particulier la partie inférieure (104) est associée aux galets de roulement (33) et que dans une autre partie, en particulier la partie supérieure (103) sont disposés des récipients (4) pour la pièce détachée (2).

3. Installation selon la revendication 1 ou 2, caractérisée en ce que l'accumulateur d'énergie ou le dispositif de stockage (97) est formé d'une batterie ou d'un réservoir pour un fluide de pression, par exemple un réservoir d'huile hydraulique ou un réservoir à air comprimé.

4. Installation selon une des revendications 1 à 3, caractérisée en ce qu'en sus du dispositif d'avance d'autres dispositifs disposés sur le porte-pièce (3) peuvent être activés indépendamment du reste de la machine par le dispositif de stockage (97).

5. Installation selon une des revendications 1 à 4, caractérisée en ce que le dispositif de transfert d'énergie comprend des champs tourbillonnaires ou d'autres sources d'énergie visibles ou invisibles, telles que des champs de lumière, des champs magnétiques ou analogues et des éléments photoélectriques.

6. Installation selon une des revendications 1 à 5, caractérisée en ce que le dispositif de commande sur le porte-pièces est construit de façon à surveiller des valeurs de mesure du trajet d'avance.

7. Installation selon une des revendications 1 à 6, caractérisée en ce que le dispositif d'avance comprend des entraînements de moteur pas-à-pas.
